## Europäisches Patentamt

(19) **European Patent Office**

**Office européen des brevets**

(11) Publication number: **0 223 323**
**B1**

---

(12) **EUROPEAN PATENT SPECIFICATION**

(45) Date of publication of the patent specification:
09.05.90

(51) Int. Cl.⁵: **B01D 29/00**, B01D 29/085,
B65D 53/02

(21) Application number: 86303750.3

(22) Date of filing: 16.05.86

---

(54) Improved filter assembly.

---

(30) Priority: 27.09.85 US 780928

(43) Date of publication of application:
27.05.87 Bulletin 87/22

(45) Publication of the grant of the patent:
09.05.90 Bulletin 90/19

(84) Designated Contracting States:
BE CH DE FR GB IT LI LU NL SE

(56) References cited:
CH-A- 327 700
GB-A- 184 021
GB-A- 842 220
US-A- 3 448 011
US-A- 4 477 347

(73) Proprietor: **Nalge Company, 75 Panorama Creek Drive P O Box 20365, Rochester New York 14602(US)**

(72) Inventor: **Leoncavallo, Richard Anthony, 22 Callingham Road, Pittsford New York 14534(US)**
Inventor: **Baird, Peter Kevin, 39 Monroe Street, Honeoye Falls New York 14472(US)**
Inventor: **Mehra, Ravinder Chamanlal, 1 Crowhill Drive, Fairport New York 14450(US)**
Inventor: **Rajguru, Sharad, 105 Strawberry Hill Road, Rochester New York 14623(US)**

(74) Representative: **Oliver, Roy Edward et al, POLLAK MERCER & TENCH High Holborn House 52-54 High Holborn, London WC1V 6RY(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention is directed to a filter unit having a reservoir and a receptacle which are securely held together in the assembled state, yet which may be readily assembled and disassembled.

Various types of securing means have been used in the prior art in order to hold together the receptacle and the reservoir of a filter unit of this type. One such means comprises a tape placed along the outer periphery of the two components which, after filtration of the liquid, is peeled off to allow disassembly. This securing means has numerous disadvantages, in that during transportation and storage the tape tends to loosen to such an extent that the assembly either comes apart or leaks air when vacuum is applied to the filter unit.

Another securing means for holding the assembly together comprises mating threaded portions of the parts. However, during long periods of shelf retention, the two parts are subject to loosening due to creep in the material. Threaded assemblies are subject to a constant force which tends to unscrew the assembly. Therefore, during transport of the filter units, vibration may cause loosening of the parts, thereby resulting in the assemblies either loosening or coming apart.

It would therefore be desirable to provide a filter assembly in which the above-mentioned disadvantages are minimised.

According to one aspect of the present invention, a filter assembly is provided comprising a reservoir for receiving a liquid to be filtered and a receptacle for receiving filtrate from the reservoir, a lower portion of the reservoir having a substantially cylindrical dependent wall and an upper portion of the receptacle having a substantially cylindrical wall, characterised in that the substantially cylindrical walls are dimensioned so that one wall is receivable within the other and that one of the walls has at least two projections extending therefrom which are engageable in respective recesses provided in the other wall so as to secure the reservoir and the receptacle together, each of which recesses includes a locking portion in which, after assembly, the associated projection is retained.

Thus, the filter assembly is provided with positive locking means to minimise or prevent loosening of the assembly during transport and storage.

Preferably, the assembly is fabricated from plastics material. In a preferred embodiment, one of the walls is made from a high impact polystyrene and the other is made from a general-purpose polystyrene.

Preferably, each recess comprises a receiving portion in which, during assembly, one of the projections is initially placed and a ramp portion extending from the receiving portion around part of the circumference of the associated wall.

Preferably, each ramp portion has a surface which contacts the associated projection during assembly and is inclined with respect to a plane substantially perpendicular to the longitudinal axis of the assembly.

The locking portion may advantageously have an indented surface which in use retains each projection in its recess.

The projection may have any desired configuration. An elongate cross-section is preferred, with a substantially planar engaging surface which is inclined with respect to the longitudinal axis of the assembly. Alternatively, each projection has a curved engaging surface which is inclined to a plane perpendicular to the longitudinal axis of the assembly by an angle which is large at the end of the engaging surface which first enters a recess during assembly and decreases towards the other end of the engaging surface.

Preferably, the wall having the recesses therein has a portion of greater radius adjacent its edge in which the projections can be received before entering the recesses.

An annular channel may be formed within one of the walls for receiving the edge of the other of the walls.

In an alternative embodiment, the lower portion of the reservoir may comprise a separable portion which includes a plate for supporting a filter membrane and a further substantially cylindrical wall dimensioned to receive or be receivable within a further substantially cylindrical wall formed on the remaining portion of the reservoir, one of the two last-mentioned cylindrical walls being provided with at least two projections extending therefrom which are engageable in respective recesses provided in the other of the two last-mentioned cylindrical walls so as to secure the separable portion to the remaining portion of the reservoir. Thus, the separable portion may be secured to the remaining portion of the reservoir in the same way as the reservoir as a whole is secured to the receptacle.

In order to minimize leakage, it is advantageous to provide a seal between the reservoir and the receptacle of a filter assembly.

Preferably, the assembly includes an annular seal disposed between the receptacle and the reservoir when secured together, which seal has a tapered outer surface for contacting the edge of one of the walls.

Preferably, the seal has a plurality of radially-extended ribs around its inner surface. In a preferred embodiment, the ribs are regularly spaced and each alternate rib has an inner surface extending substantially parallel to the longitudinal direction of the assembly in use, each of the other ribs having an inner surface which tapers in the same direction as the outer surface of the seal.

If the filter assembly includes an annular channel within one of the walls, as described above, the seal may be advantageously located within the channel.

Certain embodiments of the invention will hereinafter be described by way of example only and with reference to the accompanying drawings, in which:

Figure 1 is an exploded side elevation of a filter assembly according to the present invention;

Figure 2 is a slightly enlarged side elevation partially broken away of the filter assembly shown in Figure 1 after assembly;

Figure 3 is a further side elevation of the filter assembly shown in Figure 2;

Figure 4 a, b, c, and d are enlarged fragmentary side elevations showing various stages of assembly:

Figure 5 is a side elevation of a cap designed to be used with the receptacle portion of the filter assembly after the filtrate has been passed through the filter;

Figure 6 is a cross-section showing the seal of Figure 1, taken along the line 6-6 of Figure 1;

Figure 7 is a fragmentary perspective view, greatly enlarged, of the seal of Figure 6; and

Figure 8 is a fragmentary side elevation showing a modified form of the filter assembly of Figures 1-6.

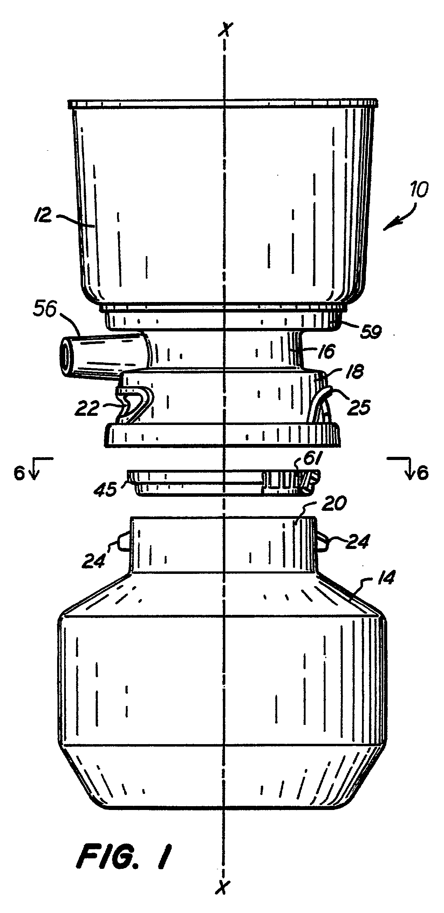

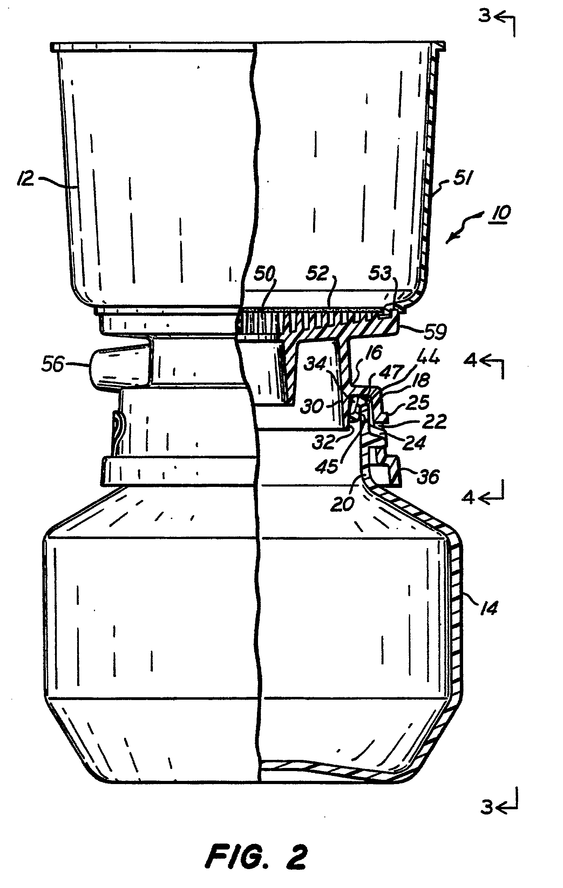

Referring to Figures 1, 2, 3 and 4 (a, b, c, d), a plastics filter assembly 10 comprises an upper receiving container or reservoir 12 for receiving a liquid to be filtered and a lower receiving container or receptacle 14 for receiving the filtrate from the upper receiving container 12. In the particular embodiment shown, the plastics material which the filter assembly 10 is made from is polystyrene. The upper receiving container 12 has a lower end 16 having a substantially cylindrical outer wall 18. The lower container 14 is provided with a substantially cylindrical wall 20 at its upper end for placement within the substantially cylindrical outer wall 18 on the upper container 12. The outside diameter of the cylindrical wall 20 on the lower container is less than the inside diameter of the cylindrical outer wall 18 on the upper container, so that it may be easily inserted and/or removed therefrom. The cylindrical outer wall 18 is provided with at least two recesses 22 which are preferably spaced substantially equidistantly about the periphery thereof for each receiving a corresponding projection, preferably in the form of a locking pin or cam follower 24, integrally formed on the outside surface of the cylindrical wall 20. Although it has been found that two recesses are adequate, any desired number of recesses may be used. Each recess 22 comprises a receiving portion 21 for entry of the cam follower 24, a ramp portion 23 adjacent the receiving portion 21 and a locking portion 27 at the end of the ramp portion 23 remote from the receiving portion. The locking portion 27 is provided with an indentation 28 for receiving the cam follower 24 and locking it in position.

The lower end 16 is further provided with a second substantially cylindrical inner wall 30 spaced radially inwardly from the cylindrical outer wall 18 so as to provide an annular receiving channel 32. Disposed within the channel 32 is a seal 34 which forms the sealing means between the upper receiving container 12 and the lower receiving container 14.

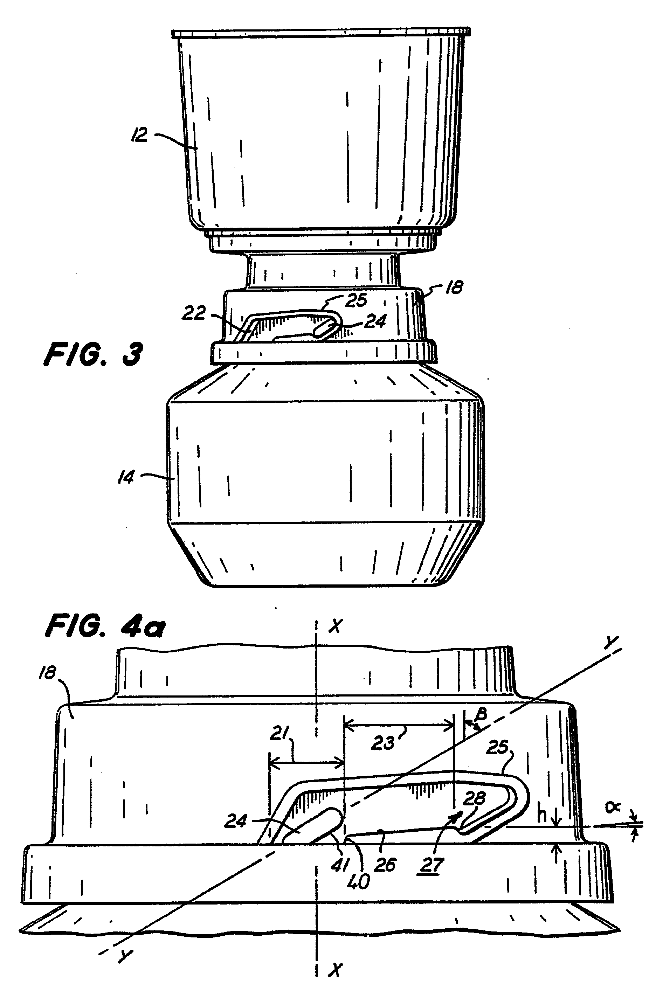

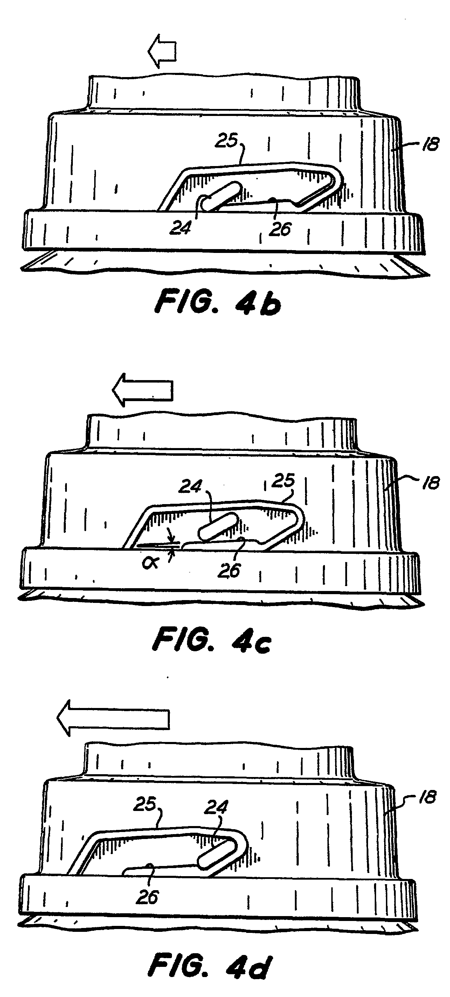

As can best be seen in Figures 4 a, b, c and d, the upper receiving container 12 and the lower container 14 are assembled by placing each cam follower 24 in a respective receiving portion 21 of a recess 22 bringing the two containers closer together and then rotating the two components relative to one another, so that the cam followers 24 ride on ramps 26 until the cam followers 24 are placed in the indentations 28.

The outer cylindrical wall 18 having the recesses 22 is preferably made of a material different from that of the cam followers 24. Preferably, one of these components is made of a high-impact polystyrene (generally having a high rubber content) and the other is made of a general-purpose polystyrene. This provides improved wear characteristics if the assembly is to be repeatedly assembled and disassembled.

The lower end 16 of the substantially cylindrical outer wall 18 is further provided with a radially extended portion 36 whose inside surface diameter is substantially equal to or greater than the diameter of the outside surface of the substantially cylindrical outer wall 18, to provide sufficient clearance so that the cam followers 24 can easily enter or leave the receiving portions 21 of the recesses 22. The radially-extended portion 36 provides rigidity to the plastics filter assembly so as to more evenly distribute the load and minimize or reduce stress concentrations in a small area. If the portion 36 is not provided, the ramp portions 26 may deflect substantially in response to the force being applied by the seal 34 during rotation of the cam followers 24 into the locking position, thereby reducing the sealing engagement of the assembly or possibly allowing undesirable areas of stress concentration to occur.

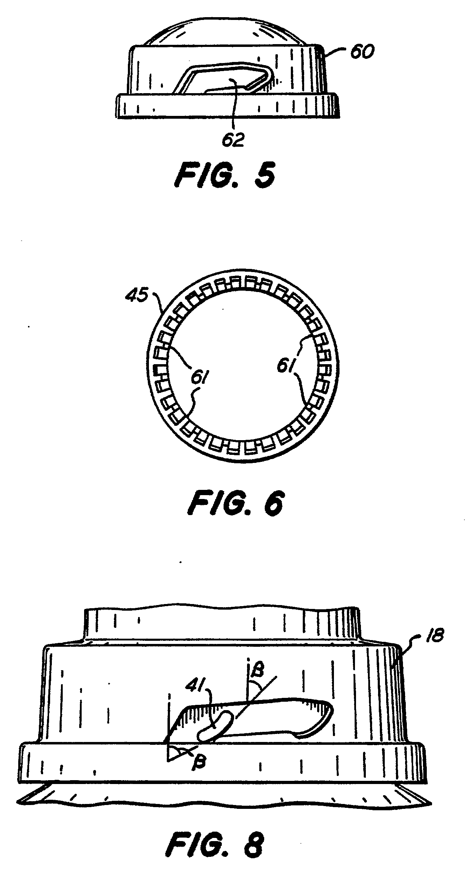

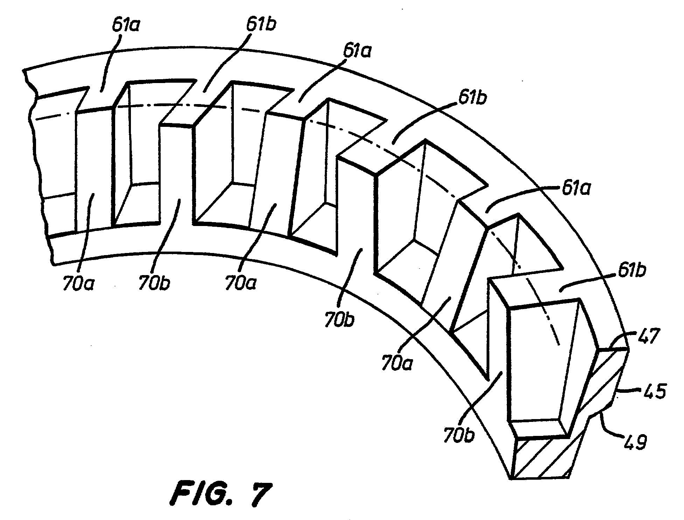

In the particular embodiment shown, a raised lip portion 25 extends around part of the perimeter of each recess 22. This helps to minimize the amount of contamination which may be deposited on the cam follower 24. However, if desired, the lip portions 25 may be entirely omitted (see Figure 8) or the recesses 22 may be covered by a protective outer wall (not shown) integral with the outer wall 18.

While a substantially circular cross-sectional configuration may be used for the cam followers 24, they preferably have an elongate cross-sectional configuration, for example in the shape of a substantially elongate rectangle as shown. This configuration minimizes mould defects which may occur as a result of the mould injection process used to make the containers 12 and 14 and minimizes stress concentraion on the cam followers 24 during assembly. The longitudinal axis Y-Y of the rectangle is inclined with respect to the longitudinal axis X-X of the filter assembly 10. Each cam follower 24 is provided with a substantially flat engaging surface 41 which first meets the end 40 of the ramp 26. During rotation of the upper receiving container with respect to the lower container, the cam follower 24 is caused to move both in a vertical and horizontal direction. However, during the initial stages of rotation, Figures 4(a) and 4 (b), the force required to displace the cam follower vertically is relatively small. Once the cam follower 24 is on the ramp 26, see Figure 4(c), the seal 34 will be compressed to such an extent that a substantially greater force is required to cause further vertical displacement. During rotation of the assembly, when the cam follower 24 is in the receiving portion 21, the surface 41 of the cam follower as it is vertically displaced contacts the same point on the end 40 of the ramp 26. However, when the cam follower 24 is completely on the ramp 26 (see Figure 4c) and as it moves along the ramp 26, the same point on the cam follower 24 contacts the ramp 26. The ramp 26 is inclined at a relatively small angle α of at least 1° with respect to a plane perpendicular to the longitudinal axis X-X of the assembly 10, the angel α preferably being in the range from 3° to 8°. In the particular embodiment shown, the ramp angle α is approximately 5°.

The engaging surface 41 of the cam follower 24 is disposed at an angle β, as measured with respect to the longitudinal axis X-X of the assembly 10, ranging from about 40° to 80°, usually greater than 45° and preferably in the range from 55° to 65°. In the particular embodiment shown, the engaging surface 41 of the cam follower 24 is disposed at an angle β of approximately 60° with respect to the longitudinal axis of the container.

As previously stated, the outer configuration of the cam follower 24 is preferably substantially rectangular. However, various other configurations may be used, for example as shown in Figure 8. In this embodiment, the surface 41 is convex, preferably such that its upper part is a relative small value of the angle β and the lower part is a relative large value of the angle β which approaches or equals the slope of the ramp 26. In this way, a smooth and easy transition can be maintained from the low pressure zone to the high pressure zone.

Referring to Figures 1, 2, 6 and 7, it can be seen that the seal 34 is substantially triangular in cross-section and has a generally tapered outer surface 45. The seal is constructed so as to provided two pressure zones in response to compression, a first relatively low pressure zone and a second relatively high pressure zone. In the particular embodiment shown, this is accomplished by a plurality of spaced ribs 61a,61b disposed around the inner circumference of the seal. The outer engaging surface 45 of the seal 34 is in use inclined to the vertical at an angle to allow the upper edge of the substantially cylindrical wall 20 to come into contact therewith. The surface may have a shoulder 49, formed therein, as shown in the drawings. As the upper receiving container and lower receiving container are relatively rotated, the upper edge 44 of the lower container 14 compresses the seal 34 at a lip 47 into a shoulder 49. During the initial phase of assembly, the seal is very supple due to the plurality of spaced ribs 61a,61b on the inside surface, which allow substantially large deflections under relatively little pressure. Once the ribs 61 have been substantially deflected there will be less space remaining between them and then the seal will require a much higher force to compress it. This is because at this stage the seal is undergoing substantially pure compression, since the upper edge 44 of the lower container is pressing directly against the lip 47. As can be seen from Figure 7, the ribs 61a,61b are not all identical but are arranged in pairs. Alternate ones 61a of the ribs have innermost surfaces 70a inclined in use with respect to the vertical, whereas alternate ones 61b have vertical innermost surfaces 70b. Preferably, the arrangement is such that the seal deforms at a first compression rate when the projections are rotated through the receiving portions, and a second compression rate when the projections are rotated through the ramp portions. The seal 34 is made of a material preferably having Shore A Hardness in the range from about 35 to about 75. In the embodiment shown, the Shore A Hardness of the seal 34 is about 55.

When the cam follower 24 is placed in the receiving portion of the recess 22, the seal goes into an initial compression zone which requires very little force to compress it. However, once the cam follower 24 is on the ramp surface 26, a substantially greater force is required to further compress the seal 34. When the cam follower 24 is placed in the indentation 28, an equilibrium exists for the forces holding together the upper receiving container 12 and the lower receiving container 14. In the preferred embodiment, the seal 34 has two distinct compression zones. However, it may be possible under proper design circumstances to have only one pressure zone or more than two pressure zones or, possibly, to omit the seal entirely. The use of a seal having two pressure zones provides ease of assembly and also provides excellent sealing, so that the filter unit can be used with vacuum and enables sufficient force to be applied to lock the assembly together when assembled. After assembly, the seal exerts a force between the two containers which assists in holding them together.

The recesses 22 are designed such that entry by the cam follower 24 and locking of the assembly occurs as a result of rotation which is preferably no greater than about 90° and most preferably is no greater than approximately 45°. In the particular embodiment shown, the recess 22 extends through a circumferential distance of approximately 20°.

In the embodiment shown, a support plate 50 is provided, which is integrally formed with the lower end 16 of the upper receiving container 12, for supporting a filter membrane 52. In actual manufacture of the upper container 12, the lower end 16 is separately formed and then later welded to a generally cylindrical shell 51 at 53 to form the upper container 12. However, the lower end 16 of the upper receiving container 12 need not be welded to the shell 51, but may be provided as a separable intermediate portion, which can have quick assembly/disassembly means at its upper end, by constructing the upper cylindrical outer wall 59 in the same manner as the outer wall 18 so as to engage an outer wall (not shown) on the shell 51 which is similar to the outer wall 20 of the lower container 14. This facilitates the use of two different materials for the cam follower 24 and the outer wall 18 having the recesses 22 therein. A seal may be provided between the separable portion and the shell. Still further, the assembly of the present invention may be modified such that the cam followers are on the inside surface of a wall and the other upstanding wall, which is placed within the wall having the cam follower may be provided with recesses. The filter membrane 52 is placed on the support plate 50. Openings are provided in the support plate 50 to allow the filtrate to pass through the filter membrane into the lower container 14. In the particular embodiment shown, an evacuation port 56 is provided so as to enhance the filtration process, as is customarily done in the art.

As can be seen, the filter assembly of the present invention can be quickly and easily assembled. Once assembled, the components will not tend to loosen, as the indentation 28 is dimensioned and shaped so that the force exerted between the parts will firmly hold them together. In the particular embodiment shown, the indentation 28 has a height with respect to the ramp 26 of about 0.008" (0.2032 mm). Once the filtration assembly has been used, the two parts are simply pressed together and rotated in opposite directions until the cam follower 24 is in the receiving portion 23; the two parts may then be simply pulled apart.

A cap 60, as shown in Figure 4, may be placed on the lower receiving container 14 so that the filtrate can be stored. This avoids any need to pour the filtrate out of the lower container into another vessel for storage. The cap 60 may be constructed with or without a seal, as may be desired by the user. A recess 62 in the cap 60 is constructed in substantially the same manner as the recess 22.

The assembly of the present invention can be modified in a variety of ways without departing from the scope of the appended claims. For example, if desired, the cam follower and recess portions may be placed on the opposite portions of the device, i.e. the recesses are provided in the upper end of the lower container and the cam followers are on the upper receiving container.

## Claims

1. A filter assembly (10) comprising a reservoir (12) for receiving a liquid to be filtered and a receptacle (14) for receiving filtrate from the reservoir (12), a lower portion of the reservoir (12) having a substantially cylindrical dependent wall (18) and an upper portion of the receptacle (14) having a substantially cylindrical wall (20), characterised in that the substantially cylindrical walls (18, 20) are dimensioned so that one wall is receivable within the other and that one of the walls (18, 20) has at least two projections (24) extending therefrom which are engageable in respective recesses (22) provided in the other wall so as to secure the reservoir (12) and the receptacle (14) together, each of which recesses includes a locking portion (27) in which, after assembly, the associated projection (24) is retained.

2. A filter assembly as claimed in claim 1, which is fabricated from plastics material.

3. A filter assembly as claimed in claim 1 or 2, in which the wall (18) having the recesses (22) is made of a different material from the projections (24), one being made from a high-impact polystyrene and the other being made from a general-purpose polystyrene.

4. A filter assembly as claimed in any preceding claim, in which each recess (22) comprises a receiving portion (21) in which, during assembly, one of the projections (24) is initially placed and a ramp portion (26) extending from the receiving portion (21) around part of the circumference of the associated wall (18, 20).

5. A filter assembly as claimed in claim 4, in which each ramp portion (26) has a surface (40) which contacts the associated projection (24) during assembly and is inclined with respect to a plane substantially perpendicular to the longitudinal axis of the assembly (10).

6. A filter assembly as claimed in claim 5, in which the contact surface of each ramp portion (26) is inclined at an angle of from 3° to 8° with respect to a plane substantially perpendicular to the longitudinal axis of the assembly (10).

7. A filter assembly as claimed in claim 5 or 6, in which each locking portion (27) has an indented surface (28) which in use retains each projection (24) in its recess (22).

8. A filter assembly as claimed in any preceding claim, in which each projection (24) has an elongate cross-section, with a substantially planar engaging surface (41) which is inclined with respect to the longitudinal axis of the assembly (10).

9. A filter assembly as claimed in claim 8, in which the engaging surface (41) is inclined at an angle of from 55° to 65° with respect to the longitudinal axis of the assembly (10).

10. A filter assembly as claimed in any of claims 1 to 7, in which each projection (24) has an elongate cross-section with a curved engaging surface (41) which is inclined to a plane perpendicular to the longitudinal axis of the assembly (10) by an angle which is large at the end of the engaging surface (41) which first enters a recess (22) during assembly and decreases towards the other end of the engaging surface (41).

11. A filter assembly as claimed in claim 10, as dependent from any of claims 5 to 7, in which the angle of inclination of the oher end of the engaging surface (41) is equal to the angle of inclination of the contact surface of the ramp portion (26).

12. A filter assembly as claimed in any preceding claim, in which each recess (22) extends a circumferential distance of about 20°.

13. A filter assembly as claimed in any preceding claim further comprising an annular seal (34) disposed between the receptacle (14) and the reservoir (12) when secured together, which seal has a tapered outer surface (45) for contacting the edge of one of the walls (18, 20).

14. A filter assembly as claimed in claim 13, wherein the seal (34) has a plurality of radially-extending ribs (61a, 61b) around it inner surface.

15. A filter assembly as claimed in claim 14, in which the ribs (61a, 61b) are regularly paced and each alternate rib (61b) has an inner surface (70b) extending substantially parallel to the longitudinal direction of the assembly (10) in use, each of the other ribs (61a) having an inner surface (70a) which tapers in the same direction as the outer surface (45) of the seal (34).

16. A filter assembly as claimed in any preceding claim, wherein an annular channel is formed within one of the walls (18, 20) for receiving the edge of the other of the walls (18, 20).

17. A filter assembly as claimed in claim 16, when dependent on one of claims 13 to 15, wherein the seal (34) is located in the channel.

18. A filter assembly as claimed in any preceding claim, wherein the wall (18, 20) having the recesses (22) therein has a portion (36) of greater radius adjacent its edge, in which the projections (24) can be received before entering the recesses (22).

19. A filter assembly as claimed in any preceding claim, wherein the lower portion of the reservoir (12) comprises a separable portion which carries the dependent wall (18) and includes a plate (50) for supporting a filter membrane (52) and a further substantially cylindrical wall dimensioned to receive or be receivable within a further substantially cylindrical wall being formed on the remaining portion of the reservoir (12), and in which one of the two last-mentioned cylindrical walls is provided with at least two projections extending therefrom which are engageable in respective recesses provided in the other wall so as to secure the separable portion to the remaining portion of the reservoir (12).

20. A container and cap assembly (10) comprising a receiving container (14) comprising an upper end having a substantially cylindrical wall, a cap (60) comprising a lower end having a substantially cylindrical outer wall and means for providing quick association or disassociation of the assembly and a positive locking of the cap (60) and receiving container (14), characterised in that such means comprise at least two recesses (62) in the cylindrical outer wall of the lower end of the cap, each recess (62) having a first receiving portion (21) and a locking portion (27) and a locking pin (24) on the cylindrical wall of the upper end of the receiving container (14) for placement in each of the recesses, the locking portion (27) having means (28) defining an indentation for receiving and locking in position the locking pin (24), the locking pin having a substantially elongated outer configuration and an engaging surface (41) inclined with respect to the longitudinal axis of the receiving container.

**Patentansprüche**

1. Filtergefüge (10) mit einem Vorratsbehälter (12) zur Aufnahme einer zu filternden Flüssigkeit und einem Sammelbehälter (14) zur Aufnahme des Filtrates des Vorratsbehälters, wobei ein unterer Teil des Vorratsbehälters (12) eine im wesentlichen zylindrische, sich nach unten erstreckende Wandung (18) und ein oberer Teil des Sammelbehälters (14) eine im wesentlichen zylindrische Wandung (20) aufweist, dadurch gekennzeichnet, daß die im wesentlichen zylindrischen Wandungen (18, 20) so ausgelegt sind, daß die eine in die andere steckbar ist und das eine der Wandungen (18, 20) wenigstens zwei, sich von diesen forterstreckende Ansatzteile (24) aufweist, die mit entsprechenden, in der jeweils anderen Wandung befindlichen Ausnehmungen (22) zur Sicherung des Vorratsbehälters (12) an dem Sammelbehälter (14) in Eingriff bringbar sind, wobei jede der Ausnehmungen (22) einen Verriegelungsabschnitt (27) aufweist, in welchem das jeweilige zugeordnete Ansatzteil (24) im montierten Zustand des Filtergefüges gehalten ist.

2. Filtergefüge (10) nach Anspruch 1, gekennzeichnet durch eine Herstellung aus Kunststoff.

3. Filtergefüge (10) nach Anspruch 1 oder 2, dadurch gekennzeichnet, daß die Wandung (18) mit den Ausnehmungen (22) aus einem anderen Werkstoff als demjenigen der Ansatzteile (24) ausgebildet ist, wobei eine aus einem stoßfesten Polystyrol und die andere aus einem allgemein verwendbaren Polystyrol ausgebildet ist.

4. Filtergefüge nach einem der vorangegangenen Ansprüche, dadurch gekennzeichnet, daß jede Ausnehmung (22) einen Aufnahmeabschnitt (21) aufweist, in welchen zu Beginn der Montage eines der Ansatzteile (24) einsetzbar ist und einen Rampenabschnitt (26), der sich ausgehend von dem Aufnahmeabschnitt (21) entlang eines Teiles des Umfangs der jeweiligen Wandung (18, 20) erstreckt.

5. Filtergefüge nach Anspruch 4, dadurch gekennzeichnet, daß jeder Rampenabschnitt (26) eine während der Montage mit dem zugeordneten Ansatzteil (24) in Berührung stehende Fläche (40) aufweist, die mit Bezug auf eine im wesentlichen senkrecht zur Längsachse des Filtergefüges (10) verlaufende Ebene geneigt angeordnet ist.

6. Filtergefüge (10) nach Anspruch 5, dadurch gekennzeichnet, daß die Berührungsfläche eines jeden Rampenabschnitts (26) unter einem Winkel von 3° bis 8° bezüglich einer im wesentlichen senkrecht zur Längsachse des Filtergefüges (10) verlaufende Ebene geneigt angeordnet ist.

7. Filtergefüge (10) nach Anspruch 5 oder 6, dadurch gekennzeichnet, daß jeder Verriegelungsabschnitt (27) eine verzahnte Fläche (28) aufweist, durch welche ein jedes Ansatzteil (24) in seiner Ausnehmung (22) gehalten ist.

8. Filtergefüge (10) nach einem der vorangegangenen Ansprüche, dadurch gekennzeichnet, daß jedes Ansatzteil (24) einen längsgestreckten Querschnitt mit einer im wesentlichen ebenen Berührungsfläche (41) aufweist, welche bezüglich der Längsachse des Filtergefüges (10) geneigt angeordnet ist.

9. Filtergefüge (10) nach Anspruch 8, dadurch gekennzeichnet, daß die Berührungsfläche (41) bezüglich der Längsachse des Filtergefüges (10) unter einem Winkel von 55° bis 65° geneigt angeordnet ist.

10. Filtergefüge (10) nach einem der Ansprüche 1 bis 7, dadurch gekennzeichnet, daß jedes Ansatzteil (24) einen längsgestreckten Querschnitt mit einer gekrümmten Berührungsfläche (41) aufweist, welche bezüglich einer zur Längsachse des Filtergefüges (10) senkrechten Ebene unter Winkeln geneigt angeordnet ist, die an dem, während der Montage zuerst in die Ausnehmung (22) eingeführten Ende groß ausfallen und in Richtung auf das andere Ende der Berührungsfläche (41) hin abnehmen.

11. Filtergefüge (10) nach Anspruch 10 sowie 5 bis 7, dadurch gekennzeichnet, daß der Neigungswinkel des anderen Endes der Berührungsfläche (41) dem Neigungswinkel der Berührungsfläche des Rampenabschnitts (26) entspricht.

12. Filtergefüge (10) nach einem der vorangegangenen Ansprüche, dadurch gekennzeichnet, daß jede Ausnehmung (22) sich über einen Umfangswinkel von ungefähr 20° erstreckt.

13. Filtergefüge (10) nach einem der vorangegangenen Ansprüche, gekennzeichnet weiterhin durch eine Ringdichtung (34), welche zwischen dem Sammelbehälter (14) einerseits und dem Vorratsbehälter (12) andererseits im aneinander montierten Zustand angeordnet ist, wobei die genannte Dichtung eine konisch verlaufende äußere Fläche (45) aufweist, die mit der Kante einer der Wandungen (18, 20) in Berührung steht.

14. Filtergefüge (10) nach Anspruch 13, dadurch gekennzeichnet, daß die Dichtung (34) entlang ihrer inneren Oberfläche mit einer Vielzahl von sich radial erstreckenden Rippen (61a, 61b) ausgerüstet ist.

15. Filtergefüge (10) nach Anspruch 14, dadurch gekennzeichnet, daß die Rippen (61a, 61b) gleichförmig angeordnet sind und daß jede abwechselnd angeordnete Rippe (61b) eine innere Fläche (70b) aufweist, die sich im wesentlichen parallel zur Längsrichtung des montierten Filtergefüges (10) erstreckt, wobei jede der übrigen Rippen (61a) eine innere Fläche (70a) aufweist, die in Richtung der äußeren Oberfläche (45) der Dichtung (34) konisch verläuft.

16. Filtergefüge (10) nach einem der vorangegangenen Ansprüche, dadurch gekennzeichnet, daß in einer der Wandungen (18, 20) ein Ringkanal eingeformt ist, der zur Aufnahme der Berandung der jeweils anderen Wandung (18, 20) dient.

17. Filtergefüge nach einem der Ansprüche 16 oder 13 bis 15, dadurch gekennzeichnet, daß die Dichtung (34) in dem genannten Kanal angeordnet ist.

18. Filtergefüge (10) nach einem der vorangegangenen Ansprüche, dadurch gekennzeichnet, daß die mit den Ausnehmungen (22) versehene Wandung (18, 20) in der Nähe ihrer Berandung einen Abschnitt (36) von größerem Radius aufweist, innerhalb welchem die Ansatzteile (24) vor Einführung in die Ausnehmungen (22) aufnehmbar sind.

19. Filtergefüge (10) nach einem der vorangegangenen Ansprüche, dadurch gekennzeichnet, daß der untere Teil des Vorratsbehälters (12) einen, die sich nach unten erstreckende Wandung (18) tragenden, trennbaren Abschnitt aufweist, eine zur Stützung einer Filtermembran (52) dienende Platte (50) umfaßt und weiterhin eine im wesentlichen zylindrische Wand aufweist, die derart bemessen ist, daß sie innerhalb einer im wesentlichen zylindrischen, an dem übrigen Teil des Vorratsbehälters (12) angeformten Wand aufnehmbar ist bzw. diese aufzunehmen vermag und daß eine der zuletzt genannten beiden zylindrischen Wandungen mit wenigstens zwei, sich von diesen forterstreckenden Vorsprüngen versehen ist, die mit entsprechenden Ausnehmungen der jeweils anderen Wandung in Eingriff bringbar sind, um den genannten trennbaren Abschnitt an dem verbleibenden Abschnitt des Vorratsbehälters (12) zu sichern.

20. Baueinheit (10), bestehend aus einem Behälter und einer Kappe, mit einem, ein oberes, mit einer im wesentlichen zylindrischen Wandung versehenes Ende aufweisenden Aufnahmebehälter (14), einer Kappe (60), welche ein unteres, mit einer im wesentlichen zylindrischen Wandung versehenes Ende aufweist und mit Mitteln zum schnellen Zusammensetzen bzw. Zerlegen der Baugruppe bzw. zur Herstellung eines Verriegelungszustands zwischen der Kappe (60) und dem Aufnahmebehälter (14), dadurch gekennzeichnet, daß die genannten Mittel aus wenigstens zwei Ausnehmungen (62) in der äußeren zylindrischen Wandung des unteren Endes der Kappe bestehen, wobei jede Ausnehmung (62) aus einem ersten Aufnahmeabschnitt (21) sowie einem Verriegelungsabschnitt (27) sowie einem, zur Aufnahme in die genannten Ausnehmungen bestimmten, an der zylindrischen Wandung des oberen Endes des Aufnahmebehälters (14) angeordneten Verriegelungsstift (24) besteht, wobei der Verriegelungsabschnitt (27) mit Mitteln (28) versehen ist, durch welche eine Verzahnung zur Aufnahme und zum Verriegeln des Verriegelungsstiftes (24) in einer Position gebildet werden, wobei der Verriegelungsstift eine im wesentlichen langgestreckte Gestalt und eine Berührungsfläche (41) aufweist, die bezüglich der Längsachse des Aufnahmebehälters geneigt angeordnet sind.

**Revendications**

1. Assemblage de filtre (10) comprenant un réservoir (12) pour recevoir un liquide à filtrer et un réceptacle (14) pour recevoir le filtrat venant du réservoir (12), une partie inférieure du réservoir (12) comportant une paroi descendante sensiblement cylindrique (18) et une partie supérieure du réceptacle (14) comportant une paroi sensiblement cylindrique (20), caractérisé en ce que les parois sensiblement cylindriques (18, 20) sont dimensionnées de sorte qu'une paroi peut être reçue à l'intérieur de l'autre, et en ce qu'une des parois (18, 20) comporte au moins deux saillies (24) s'étendant à partir de ladite paroi et qui peuvent s'engager dans des logements respectifs (22) prévus dans l'autre paroi de manière à fixer le réservoir (12) et le réceptacle (14) l'un à l'autre, chacun de ces logements comprenant une partie de verrouillage (27) dans laquelle, après assemblage, la saillie associée (24) est retenue.

2. Assemblage de filtre suivant la revendication 1, qui est fabriqué en matière plastique.

3. Assemblage de filtre suivant la revendication 1 ou 2, dans lequel la paroi (18) comportant les logements est fabriquée en une matière différente de celle des saillies (24), l'une étant en polystyrène de type choc et l'autre étant en polystyrène de type courant.

4. Assemblage de filtre suivant l'une quelconque des revendications précédentes, dans lequel chaque logement (22) comprend une partie de réception (21) dans laquelle, pendant l'assemblage, l'une des saillies (24) est initialement placée, et une rampe (26) s'étendant à partir de la partie de réception (21) sur une partie de la circonférence de la paroi associée (18, 20).

5. Assemblage de filtre suivant la revendication 4, dans lequel chaque rampe (26) présente une surface (40) qui est en contact avec la saillie associée (24) pendant l'assemblage et qui est inclinée par rapport à un plan sensiblement perpendiculaire à l'axe longitudinal de l'assemblage (10).

6. Assemblage de filtre suivant la revendication 5, dans lequel la surface de contact de chaque rampe (26) est inclinée suivant un angle de 3° à 8° par rapport à un plan sensiblement perpendiculaire à l'axe longitudinal de l'assemblage (10).

7. Assemblage de filtre suivant la revendication 5 ou 6, dans lequel chaque partie de verrouillage (27) présente une surface entaillée (28) qui retient chaque saillie (24) dans son logement (22) en utilisation.

8. Assemblage de filtre suivant l'une quelconque des revendications précédentes, dans lequel chaque saillie (24) a une section transversale allongée, avec une surface de contact sensiblement plane (41) qui est inclinée par rapport à l'axe longitudinal de l'assemblage (10).

9. Assemblage de filtre suivant la revendication 8, dans lequel la surface de contact (41) est inclinée suivant un angle de 55° à 65° par rapport à l'axe longitudinal de l'assemblage (10).

10. Assemblage de filtre suivant l'une quelconque des revendications 1 à 7, dans lequel chaque saillie (24) a une section transversale allongée, avec une surface de contact courbe (41) qui est inclinée par rapport à un plan perpendiculaire à l'axe longitudinal de l'assemblage (10) suivant un angle qui est grand à l'extrémité de la surface de contact (41) qui pénètre la première dans un logement (22) pendant l'assemblage, ledit angle diminuant vers l'autre extrémité de la surface de contact (41).

11. Assemblage de filtre suivant la revendication 10, lorsqu'elle dépend de l'une quelconque des revendications 5 à 7, dans lequel l'angle d'inclinaison de l'autre extrémité de la surface de contact (41) est égale à l'angle d'inclinaison de la surface de contact de la rampe (26).

12. Assemblage de filtre suivant l'une quelconque des revendications précédentes, dans lequel chaque logement (22) s'étend sur une distance circonférentielle de 20° environ.

13. Assemblage de filtre suivant l'une quelconque des revendications précédentes, comprenant en outre une garniture d'étanchéité annulaire (34) disposée entre le réceptacle (14) et le réservoir (12) lorsqu'ils sont fixés l'un à l'autre, ladite garniture présentant une surface extérieure conique (45) pour venir en contact avec le bord d'une des parois (18, 20).

14. Assemblage de filtre suivant la revendication 13, dans lequel la garniture d'étanchéité (34) comporte une pluralité de nervures s'étendant radialement (61a, 61b), autour de sa surface intérieure.

15. Assemblage de filtre suivant la revendication 14, dans lequel les nervures (61a, 61b) sont régulièrement espacées, et une nervure (61b) sur deux présente une surface intérieure (70b) s'étendant sensiblement parallèlement à la direction longitudinale de l'assemblage (10) en utilisation, chacune des autres nervures (61a) présentant une surface intérieure (70a) qui diverge dans la même direction que la surface extérieure (45) de la garniture (34).

16. Assemblage de filtre suivant l'une quelconque des revendications précédentes, dans lequel un canal annulaire est formé dans l'une des parois (18, 20) pour recevoir le bord de l'autre des parois (18, 20).

17. Assemblage de filtre suivant la revendication 16, lorsqu'elle dépend d'une des revendications 13 à 15, dans lequel la garniture d'étanchéité (34) est placée dans le canal.

18. Assemblage de filtre suivant l'une quelconque des revendications précédentes, dans lequel la paroi (18, 20) comportant les logements (22) comprend une partie (36) de plus grand rayon, adjacente à son bord, dans laquelle les saillies (24) peuvent être reçues avant de pénétrer dans les logements (22).

19. Assemblage de filtre suivant l'une quelconque des revendications précédentes, dans lequel la partie inférieure du réservoir (12) comprend une partie séparable qui porte la paroi descendante (18) et comporte une plaque (50) pour supporter une membrane filtrante (52) et une autre paroi sensiblement cylindrique dimensionnée pour recevoir ou être reçue dans une autre paroi sensiblement cylindrique formée sur la partie restante du réservoir (12), et dans lequel l'une des deux parois cylindriques citées en dernier comporte au moins deux saillies s'étendant à partir de ladite paroi et qui peuvent s'engager dans des logements respectifs prévus dans l'autre paroi de façon à fixer la partie séparable à la partie restante du réservoir (12).

20. Assemblage (10) d'un récipient et d'un couvercle, comprenant un récipient de réception (14) comportant une extrémité supérieure à paroi sensiblement cylindrique, un couvercle (60) comportant une extrémité inférieure à paroi extérieure sensiblement cylindrique, et des moyens pour effectuer une association ou une dissociation rapides de l'assemblage et un verrouillage positif du couvercle (60) et du récipient de réception (14), caractérisé en ce que lesdits moyens comprennent au moins deux logements (62) dans la paroi extérieure cylindrique de l'extrémité inférieure du couvercle, chaque logement (62) comprenant une première partie de réception (21) et une partie de verrouillage (27), et une tige de verrouillage (24) sur la paroi cylindrique de l'extrémité supérieure du récipient de réception (14) pour introduction dans chacun des logements, la partie de verrouillage (27) comportant des moyens (28) qui définissent une indentation de réception et de verrouillage en position de la tige de verrouillage (24), celle-ci ayant une configuration extérieure sensiblement allongée et une surface d'engagement (41) inclinée par rapport à l'axe longitudinal du récipient de réception.

**FIG. 1**

**FIG. 2**

EP 0 223 323 B1

FIG. 3

FIG. 4a

FIG. 4b

FIG. 4c

FIG. 4d

**FIG. 5**

**FIG. 6**

**FIG. 8**

**FIG. 7**